# EUROPEAN PATENT APPLICATION

(11) **EP 4 166 261 A1**
(43) Date of publication of application: **19.04.2023**
(21) Application number: 21202919.3
(22) Date of filing: 15.10.2021
(51) Int. Cl.: B22F 10/14, B33Y 10/00, C22C 1/05, C22C 29/02, B33Y 80/00, B22F 5/00

(54) **METHOD FOR MANUFACTURING A SINTERED ARTICLE AND A SINTERED ARTICLE**

(71) Applicant: Sandvik Machining Solutions AB, 811 81 Sandviken (SE)
(72) Inventor: GYLLENFLYKT, Tobias, 811 81 Sandviken (SE); SUNDSTRÖM, Johan, 811 81 Sandviken (SE)
(74) Representative: Sandvik

(57) **Abstract**

Disclosed is a method for additively manufacturing an article comprising cemented carbide or cermet, wherein the article comprises at least one binder-free region. The method comprises a) depositing (102) a layer of powder composition and b) adding (104) binder to the area corresponding to the cross-section of the article in the powder composition, except for the at least one binder-free region, if present in that layer. The method further comprises repeating steps a) and b) for each layer of the article, thereby obtaining a green article, and sintering (106) the green article, thus obtaining a manufactured article.

## Description

### Technical field

The present disclosure relates generally to methods for producing a sintered article, and a sintered article.

### Background

Additive manufacturing, also known as 3D printing, generally involves printing an articulate one layer at a time using specialized systems. In particular, a layer of material may be deposited on the working surface of a build chamber and bonded with another layer of the same or of a different material. Additive manufacturing may be used to manufacture articles from computer-aided design models using techniques such as powder bed fusion (PBF), direct metal laser sintering (DMLS) or binder jetting.

Additive manufacturing of cemented carbide or cermet bodies are preferably done by a 3D printing technique that first creates a green article after which the green article is sintered in a separate furnace. The additive manufacturing may also comprise steps of curing the green article, and of depowdering the green article before it is sintered.

In additive manufacturing technology using binder, such as binder jetting, one layer of powder is deposited on the working surface of the build chamber, and then a liquid binding agent, i.e. a binder, is added to the powder in order to glue the powder particles together.

However, the microstructure of an article manufactured with an additive manufacturing technology using binder is generally not as desirable as the structure of a pressed article of cermet or cemented carbide. For many articles, it may be beneficial for some regions to have a better microstructure, for example in regions intended to be an engagement region of the article.

Another issue with articles manufactured with an additive manufacturing technology using binder is porosity, which is often higher than what is desirable.

Consequently, there exists a need for improvement when it comes to methods for producing sintered articles using binder jetting.

### Summary

It is an object of the invention to address at least some of the problems and issues outlined above. An object of embodiments of the invention is to provide an improved way of additively manufacturing sintered articles, especially such that the finished article has at least one of improved microstructure and lower porosity.

According to one aspect, a method for additively manufacturing an article comprising cemented carbide or cermet wherein the article comprises at least one binder-free region is provided. The method comprises a) depositing a layer of powder composition and b) adding binder to the area corresponding to the cross-section of the article in the powder composition, except for the at least one binder-free region, if present in that layer. The method further comprises repeating steps a) and b) for each layer of the article, thereby obtaining a green article, and sintering the green article, thus obtaining a manufactured article.

According to another aspect, a sintered article manufactured using additive manufacturing is provided. The article comprises a region where binder was added during an additive manufacturing of the article, and at least one binder-free region, the binder-free region being a region of the article where no binder was added during the additive manufacturing of the article.

Further possible features and benefits of this solution will become apparent from the detailed description below.

### Brief description of drawings

The solution will now be described in more detail by means of exemplary embodiments and with reference to the accompanying drawings, in which:
Fig. 1 is a schematically shows steps of a method according to an embodiment.
Figs. 2A shows an article comprising a binder-free region according to an embodiment.
Fig. 2B shows an article comprising a plurality of binder-free regions according to an embodiment.
Fig. 3 shows an article comprising a binder-free region according to an embodiment.
Figs. 4A-4C show the microstructure of different regions of an article.

### Detailed description

Briefly described, the present disclosure provides a method for additively manufacturing a sintered article, using e.g. binder jetting, wherein the green article comprises at least one binder-free region before being sintered, wherein the sintered article may be a finished or semi-finished component for cutting tools or wear parts. The method comprises, for each layer of a plurality of layers, depositing a layer of powder composition, and then adding binder to an area corresponding to the cross-section of the article in the powder composition, except for the at least one binder-free region, if present in that layer. The method further comprises repeating the steps of depositing powder and adding binder for all layers and obtaining a green article, which is then sintered in order to obtain the sintered article. The binder-free regions may be used e.g. for the parts of the finished sintered product which will be subjected to more stress than others, such as parts intended to be engagement regions.

An insight relevant for the present disclosure is that the microstructure in parts of a sintered article may be improved by leaving out binder in certain regions of the article during the additive manufacturing steps. When the green article is sintered, the previous deposition of binder may have resulted in less desired microstructure in regions with binder added, compared with binder-free regions, for example due to that the regions with added binder have areas with more metallic binder phase, such as cobalt, herein referred to as cobalt or metallic binder phase enrichment areas, present in them.

With "improved", it is entailed here that a more uniform distribution of hard phase and metallic binder phase is achieved, especially with regard to the size of the largest binder phase enrichment areas that are reduced in size in the binder-free regions as compared to the regions with binder added. Such improvement in microstructure may be beneficial for the local hardness distribution, which in turn has implications in the performance of a cutting tool.

Yet another advantage of the present method is that it allows improved means to control and minimize porosity. The porosity of the binder-free regions, after sintering, will be lower than in the regions with binder added. Further, the porosity of the binder-free regions in a sintered article is finer and has a reduced degree of surface connectivity than the regions with binder added. Preferably, the degree of sintering allows all pores within the prior binder-free regions to be isolated without any surface connection. In such a preferred case, the pressurized stage of the sinter cycle results in a transmission of the pressure to the region within where binder was added and which thereby contains a higher degree of pore connectivity, that at least locally enables pores in this region to be collapsed and densified. Further, the surface connected pores which may remain in the outer periphery of the sintered article, outside the prior binder-free region, can then be removed by grinding in areas where a performance region at the surface is wanted.

Thus, the present disclosure provides a way to improve at least one, and in most cases both, of the microstructure and the porosity of an article manufactured by using methods as disclosed herein, especially in performance regions of the article. For such performance regions, a binder-free region may be employed.

For the purpose of this disclosure, a binder-free region is defined as a region of the sintered article or green article, in which no binder was added during the additive manufacturing steps. The binder-free regions need to be surrounded by, or encapsulated by, regions with binder added. Further, the binder-free regions are often positioned in proximity of the surface of the article, and the thickness of the binder-free regions may depend on green strength requirements.

Further, a region with binder added is defined as a region of the sintered article or green article, in which binder was added during the additive manufacturing steps. Thus, even if no binder is present in the sintered article, due to being removed during the sintering step, the regions may still be referred to as binder-free regions and regions with binder added.

Throughout this disclosure, the terms "performance region", "engagement region" and "high stress" region are used. Performance region denotes a region of the article which requires or is benefitted by less porosity and/or an improved microstructure.

A performance region can be of two types, one is an engagement region, which is a region comprising an engagement surface, wherein the engagement surface is a part of the article adapted to be in engagement with other objects, for example the tip of a drill or the cutting edge of a tool.

The other type of performance region is a high stress region, which is a region of the article which also benefits from a lower porosity and/or an improved microstructure than other regions, but which does not comprise an engagement surface.

The method is applicable for additive manufacturing techniques using binder, such as binder jetting. The method may further be especially suitable for producing cemented carbide or cermet articles.

The term "cermet" is herein intended to denote a material comprising hard constituents in a metallic binder phase, wherein the hard constituents comprise carbides or carbonitrides of one or more of Ta, Ti, Nb, Cr, Hf, V, Mo and Zr, such as TiN, TiC and/or TiCN.

The term "cemented carbide" is herein intended to denote a material comprising hard constituents in a metallic binder phase, wherein the hard constituents comprise at least 50 wt% WC grains. The hard constituents can also comprise carbides or carbonitrides of one or more of Ta, Ti, Nb, Cr, Hf, V, Mo and Zr, such as TiN, TiC and/or TiCN.

The metallic binder phase in the cermet or in the cemented carbide is a metal or a metallic alloy, and the metal can for example be selected from Cr, Mo, Fe, Co or Ni alone or in any combination. Preferably the metallic binder phase comprises a combination of Co, Ni and Fe, a combination of Co and Ni, or only Co. The metallic binder phase can comprise other suitable metals as known to the skilled person. The average content of metallic binder phase in the powder is 4-30 wt%, preferably 6-17 wt% or 10-13 wt%.

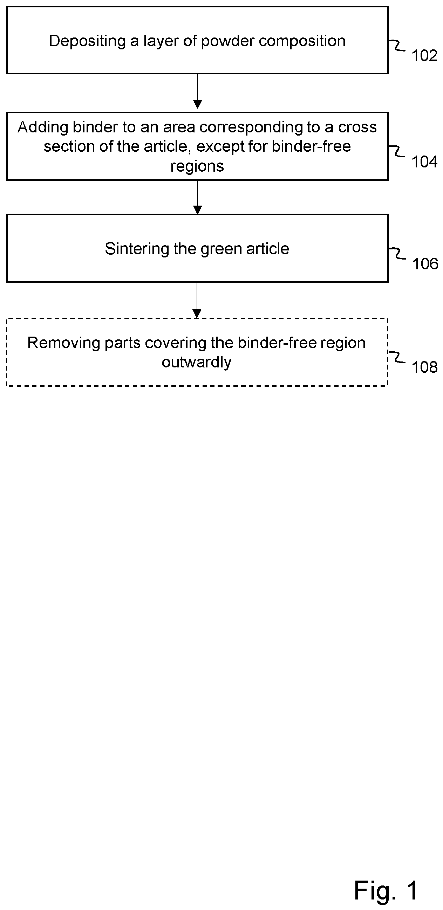

Looking now at Fig. 1, steps of a method for manufacturing a sintered article according to an embodiment will now be described in more detail.

The method comprises depositing 102 a layer of powder composition, and adding 104 binder to an area corresponding to a cross section of the green article, except for binder-free regions, if present in that layer. As will be understood, it is possible that a binder-free region is not present in each layer of powder composition, even though the article comprises at least one binder-free region. The method then comprises repeating the depositing 102 and adding 104 steps for each layer needed to form the green article.

In other words, the method comprises, for each layer of powder composition, adding binder to the regions which are not binder-free regions, which will in most cases be a majority of the article, and leaving out binder in the binder-free regions. The method differs from conventional binder jetting technique in that the binder is not added to the entire cross section of the green article in each layer, since it is left out of the binder-free regions. This results in that at least some layers of powder composition of the green article, after the additive manufacturing steps, comprises one or a plurality of binder-free regions.

After the additive manufacturing steps 102 and 104 have been performed and repeated for each layer, an additively manufactured article, also called a green article, is obtained. The additively manufactured green article comprises at least one binder-free region, i.e. a region with loose powder without binder added to it, while the rest of the green article comprises both powder and binder.

The method further comprises sintering 106 the article, thereby producing a sintered article. In some embodiments, the sintering comprises first using vacuum sintering, and then using high pressure sintering. In some embodiments, sintering is carried out by a so called sinter-HIP cycle in which the last stage of sintering is done under an elevated pressure, e.g. 20-50 bars.

In some embodiments, the method further comprises, after the additive manufacturing steps 102, 104 and before the sintering step 106, a step of curing the green article in order to harden the binder, and/or a step of de-powdering the green article in order to remove loose powder not intended to form a part of the sintered article.

By using methods according to the present disclosure, a sintered article is obtained comprising at least two different types of regions, wherein one type of region is a binder-free region having sintered properties closer to a pressed cemented carbide or cermet article. Preferably, the microstructure of each binder-free region of the sintered article is such that the distribution between metallic binder phase and hard phase are less uneven, particularly such that there are no regions with large accumulations of cobalt. Yet another advantage is that these regions are less susceptible to contain surface connected porosity.

Even though it has been discovered that the sintered properties in the performance regions, i.e. the binder-free regions, are superior to the surrounding regions, a reason to limit the total volume of binder-free enclosures is that the strength of the green article otherwise might become too low, which might be detrimental to e.g. depowdering and handling the green article.

Another reason for limiting the total volume of binder-free regions is to minimize as much as possible the effect of uneven shrinkage throughout the article while sintering. This effect of uneven shrinkage is derived by the difference in shrinkage rates between powder volumes with added binder and volumes of binder-free regions. Such uncontrollable influence on sintering shrinkage will diminish in accordance to the decreased relative volume of binder-free regions.

In some embodiments, the binder-free region is a performance region of the article. In some embodiments, the binder-free region is an engagement region of the article. In some embodiments, the binder-free region is a high stress region of the article.

In some embodiments, the binder-free region is located at or close to at least one edge or surface of the article.

In some embodiments, the binder-free region has an elongated shape.

In some embodiments, the article is manufactured using binder jetting.

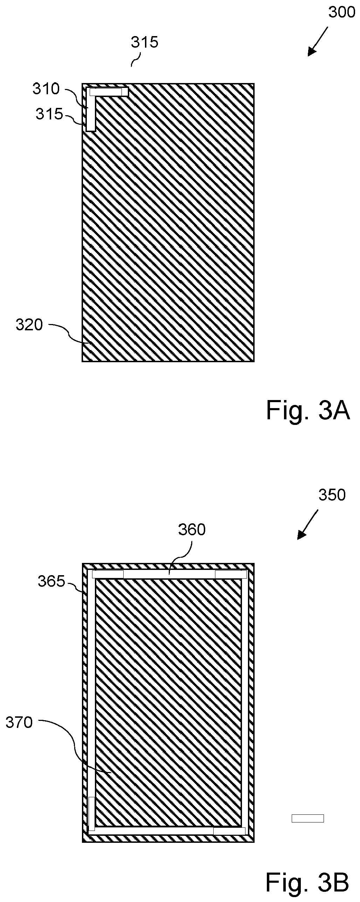

In some embodiments, binder-free regions are located all around the article, such as shown in Fig. 3B.

In some embodiments, the binder-free regions are located perpendicular to the direction in which the powder layers are deposited during the additive manufacturing steps. This may further decrease porosity in the sintered article.

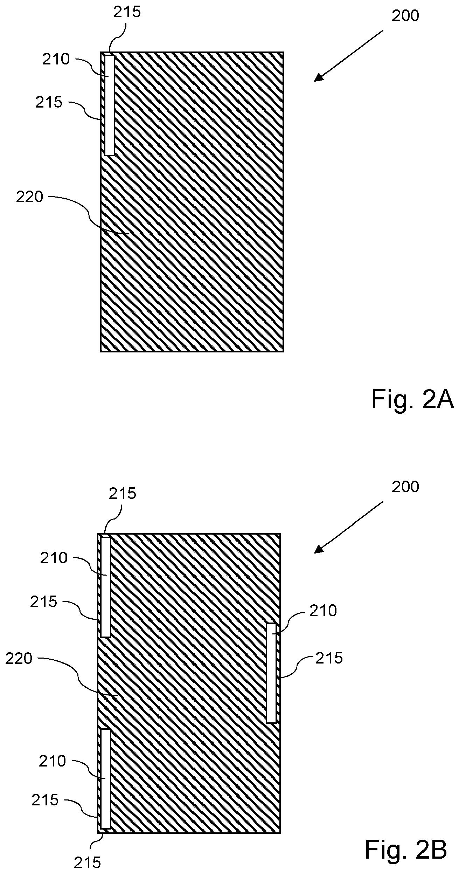

Fig. 2A shows a cross section or a powder layer of an embodiment of an article 200, which may be either of the green article or of the sintered article, comprising a binder-free region 210 and a region 220 with binder added to it. To connect this to the previously described method steps, the region 220 is a region in which binder is added to the powder, and the binder-free region 210 is a region in which binder is not added to the powder.

The article 200 may further comprise one or a plurality of portions 215 covering the binder-free region 210 on an external side of the binder-free region 210. The covering portions 215 are, as will be understood, parts comprising both powder and binder.

This is further exemplified in Fig. 2B showing a cross section or a powder layer of another embodiment of an article 200, comprising three binder-free regions 210 and a plurality of portions 215 covering the binder-free regions. As can be seen, the two binder-free regions 210 on the left side of the article 200 are surrounded on two sides by portions 215 covering them, whereas the binder-free region 210 on the right side of the article 200 is only covered on one side by a covering portion 215.

In some embodiments, after the article has been sintered, these portions 215 may be removed, e.g. by grinding, such that the binder-free regions 210 of the sintered article are outwardly exposed.

In some embodiments, the article 200 comprises at least two binder-free regions. In some embodiments, the article 200 comprises a plurality of binder-free regions.

In some embodiments, the finished article comprises from 0,1 - 10% binder-free regions and the remainder regions with both powder and binder. In some embodiments, the finished article comprises from 0,2 - 1% binder-free regions and the remainder regions with both powder and binder.

In some embodiments, the article is a component of a machining tool, for example a machining tool used for grinding or for cutting.

In some embodiments, the method further comprises removing 208 parts of the sintered article covering the binder-free regions outwardly, such that the binder-free regions are located at the surface of the article.

Looking now at Fig. 3A, a cross section or a powder layer of another embodiment of an article is shown, comprising one binder-free region 310 in a different shape than the binder-free regions of Figs. 2A and 2B. The binder-free region 310 in Fig. 3 may be seen as covering a corner of the article 300, and has a shape closer to an L-shape than an elongated shape. The article 300 also comprises, similarly to the articles of Figs. 2A and 2B, a region 320 with binder added, and portions 315 covering the binder-free region 310 outwardly.

Looking now at Fig. 3B, a cross section or a powder layer of another embodiment of an article 350 is shown, comprising a binder free region 360 disposed around the perimeter of the entire article 350. The article further comprises portions 365 covering the binder-free region 360 outwardly, and a region 320 with binder added. Such embodiments may be relevant when the entire article benefits from having lower porosity inside the prior binder-free region as well as the possibility to apply grinding for exposing improved microstructure anywhere at the article's surface.

As will be understood, the binder-free regions of articles manufactured using methods as disclosed herein may differ depending on the article and its intended use. There is not limitation of what shapes a binder-free region can have, other than those imposed by the capabilities of the manufacturing system being used.

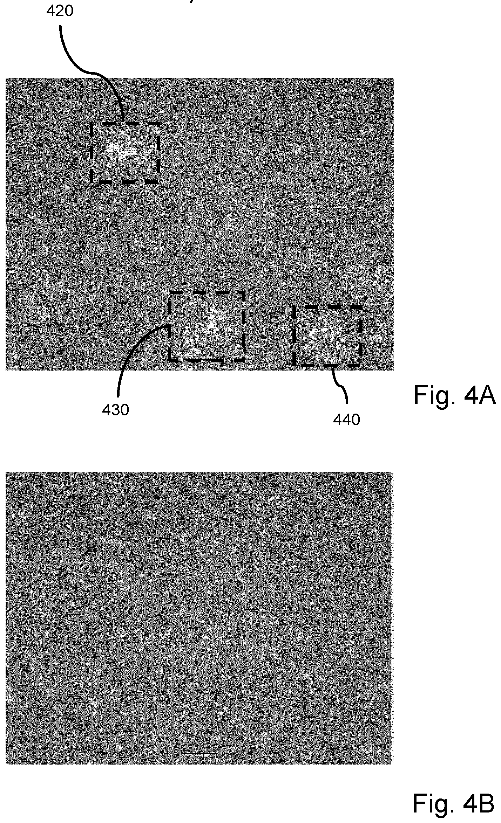

Looking now at Figs. 4A and 4B, the difference in microstructure between binder-free regions and regions with added binder, which can be achieved by employing methods according to the present disclosure, will now be described. As described previously, it is generally preferable with a relatively uniform distribution between hard phase and binder phase in a sintered article, such that there are no large accumulations of binder phase anywhere in the finished sintered article.

Fig. 4A shows the microstructure of a region of a sintered article where binder was added during the additive manufacturing steps, and Fig. 4B shows the microstructure of a binder-free region of the sintered article. The lighter parts on the figures represent binder phase, in this case cobalt, and the darker parts represent the hard phase, such as WC. As can be seen, Fig. 4A has more and larger light parts than Fig. 4B.

Looking now at Fig. 4A, a region with added binder, the distribution between cobalt and hard phase is less uniform than in the binder-free region. There are several areas comprising mainly cobalt, such as the ones denoted 420, 430, 440.

Looking now at Fig. 4B, showing a binder-free region, the distribution between cobalt and hard phase is relatively uniform. It can still be seen that some parts of the image are brighter than other parts, but overall the structure is relatively uniform, and significantly more uniform than the part shown in Fig. 4A.

By looking at Figs. 4A and 4B it can be seen that the distribution of cobalt and hard phase is more uniform in the areas in which no binder was added, than in the areas where binder was added, which is one of the key insights underlying the present disclosure.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method for additively manufacturing an article comprising cemented carbide or cermet wherein the article comprises at least one binder-free region, the method comprising:
a) depositing (102) a layer of powder composition;
b) adding (104) binder to the area corresponding to the cross-section of the article in the powder composition, except for the at least one binder-free region, if present in that layer;
repeating steps a) and b) for each layer of the article, thereby obtaining a green article;
sintering (106) the green article, thus obtaining a manufactured article.

2. The method according to claim 1, wherein the binder-free region is a performance region of the article.

3. The method according to any one of the previous claims, wherein the binder-free region is an engagement region of the article.

4. The method according to any one of the previous claims, wherein the binder-free region is located at an edge of the article.

5. The method according to any one of the previous claims, wherein the binder-free regions have an elongated shape.

6. The method according to any one of the previous claims, wherein there is less cobalt enrichment areas in the binder-free regions than in the rest of the article.

7. The method according to any one of the previous claims, wherein the thickness of the binder free regions are less than 2 mm.

8. The method according to any one of the previous claims comprising cemented carbide, wherein the cemented carbide comprises cobalt as a binder phase.

9. The method according to any one of the previous claims, wherein the article is a component of a machining tool.

10. The method according to any one of the previous claims, wherein the article is manufactured using binder jetting.

11. A sintered article (200) manufactured using additive manufacturing, comprising:
a region (220) where binder was added during an additive manufacturing of the article;
at least one binder-free region (210), the binder-free region being a region of the article where no binder was added during the additive manufacturing of the article.

12. The article (200) according to claim 11, wherein the binder-free region is a performance region of the article.

13. The article (200) according to claim 11 or 12, wherein the binder-free region is located at an edge of the article.

14. The article (200) according to any one of claims 11-13, wherein the binder-free region has an elongated shape.

15. The article (200) according to any one of claims 11-14, manufactured using the method according to any one of claims 1-10.
